Europäisches Patentamt

European Patent Office

Office européen des brevets

(19)

(11) **EP 0 605 481 B1**

(12) **EUROPÄISCHE PATENTSCHRIFT**

(45) Veröffentlichungstag und Bekanntmachung des Hinweises auf die Patenterteilung:
**11.12.1996 Patentblatt 1996/50**

(21) Anmeldenummer: **92919191.4**

(22) Anmeldetag: **12.09.1992**

(51) Int Cl.⁶: **C08G 18/62**, C08G 18/80, B05D 7/16

(86) Internationale Anmeldenummer:
**PCT/EP92/02098**

(87) Internationale Veröffentlichungsnummer:
**WO 93/07195 (15.04.1993 Gazette 1993/10)**

(54) **WÄSSRIGE LACKE UND VERFAHREN ZUR HERSTELLUNG VON AUTOMOBILDECKLACKIERUNGEN**

AQUEOUS PAINTS AND PROCESS FOR MANUFACTURING CAR COATING VARNISHES

PEINTURES AQUEUSES ET PROCEDE POUR LA FABRICATION DE VERNIS DE FINITION POUR AUTOMOBILES

(84) Benannte Vertragsstaaten:
**AT BE CH DE DK ES FR GB IT LI NL SE**

(30) Priorität: **28.09.1991 DE 4132430**

(43) Veröffentlichungstag der Anmeldung:
**13.07.1994 Patentblatt 1994/28**

(73) Patentinhaber: **BASF Lacke + Farben AG**
**48165 Münster-Hiltrup (DE)**

(72) Erfinder:
• **SCHWARTE, Stephan**
**D-48282 Emsdetten (DE)**

• **GROSCH, Horst**
**D-8702 Leinach (DE)**

(56) Entgegenhaltungen:
**EP-A- 0 038 127       EP-A- 0 324 334**
**EP-A- 0 365 775       WO-A-90/02159**
**DE-A- 3 918 968**

• **CHEMICAL ABSTRACTS, vol. 101, no. 16, Oktober 1984, Columbus, Ohio, US; abstract no. 132533q, ROSTHAUSER ET AL 'BLOCKED ISOCYANATES IN COATINGS' Seite 101 ; Spalte 2 ;**

**Beschreibung**

Die Erfindung betrifft wäßrige Lacke, ein Verfahren zur Herstellung von Automobildecklackierungen und die Verwendung der wäßrigen Lacke zur Herstellung von Automobildecklackierungen.

Die Lackindustrie ist aus ökologischen und ökonomischen Gründen bestrebt, einen möglichst großen Teil der in Lacken eingesetzten organischen Lösemittel durch Wasser zu ersetzen.

Insbesondere bei der Automobildecklackierung besteht ein großer Bedarf an wäßrigen Lacken. Unter Automobildecklacken werden die Lacke verstanden, die zur Herstellung der obersten Lackschicht verwendet werden. Die oberste Lackschicht kann einschichtig oder mehrschichtig, insbesondere zweischichtig sein.

Zweischichtige Decklackierungen bestehen aus einer pigmentierten Basislackschicht und einer auf die Basislackschicht aufgebrachten unpigmentierten oder nur mit transparenten Pigmenten pigmentierten Klarlackschicht. Zweischichtlackierungen werden heute nach dem "Naß-in-Naß"-verfahren hergestellt, bei dem ein pigmentierter Basislack vorlackiert wird und die so erhaltene Basislackschicht ohne Einbrennschritt mit einem Klarlack überlackiert und anschließend Basislackschicht und Klarlackschicht zusammen eingebrannt werden. Dieses Verfahren ist ökonomisch sehr vorteilhaft, stellt aber hohe Anforderungen an den Basislack und den Klarlack. Der auf den noch nicht eingebrannten Basislack applizierte Klarlack darf die Basislackschicht nicht anlösen oder sonstwie stören, weil sonst Lackierungen mit schlechtem Aussehen erhalten werden. Dies gilt insbesondere für Lackierungen, bei denen Basislacke, die Effektpigmente (z.B. Metallpigmente, insbesondere Aluminiumflakes oder Perlglanzpigmente) enthalten, eingesetzt werden.

Die der vorliegenden Erfindung zugrundeliegende Aufgabenstellung bestand darin, neue wäßrige Lacke bereitzustellen, die im Vergleich zu den vergleichbaren Lacken des Standes der Technik verbesserte Eigenschaften aufweisen und/oder verbesserte Lackfilme liefern. Die neuen Lacke sollen vor allem zur Herstellung von Automobildecklackierungen geeignet sein und insbesondere eine verringerte Neigung zur Kocherbildung (popping) aufweisen. Unter Kochern werden auf Gasblasen zurückzuführende Störungen im Lackfilm verstanden.

Die Aufgabenstellung wurde überraschenderweise durch die Bereitstellung von wäßrigen Lacken gelöst, die

(A) ein wasserverdünnbares Polyacrylatharz und

(B) ein blockiertes Polyisocyanat oder eine Mischung aus blockierten Polyisocyanaten

enthalten, wobei das wasserverdünnbare Polyacrylatharz (A) erhältlich ist, indem

(I)
    eine Komponente (a), bestehend aus

    (a1) 40 bis 86,75, vorzugsweise 40 bis 80 Gew.-% eines von (a2) verschiedenen und mit (a2), (a3), (b1) und (b2) copolymerisierbaren, im wesentlichen carboxylgruppenfreien (Meth)acrylsäureesters oder eines Gemisches aus solchen (Meth)acrylsäureestern und

    (a2) 12 bis 50, vorzugsweise 16 bis 45 Gew.-% eines mit (a1), (a3), (b1) und (b2) copolymerisierbaren, ethylenisch ungesättigten Monomeren, das mindestens eine Hydroxylgruppe pro Molekül trägt und im wesentlichen carboxylgruppenfrei ist oder eines Gemisches aus solchen Monomeren und

    (a3) 0 bis 25, vorzugsweise 0 bis 20 Gew.-% eines mit (a1), (a2), (b1) und (b2) copolymerisierbaren, im wesentlichen carboxylgruppenfreien, von (a1) und (a2) verschiedenen, ethylenisch ungesättigten Monomeren oder eines Gemisches aus solchen Monomeren

wobei der Ausdruck "im wesentlichen carboxylgruppenfrei" der nochfolgend augegebenen Definition entspricht, und eine Komponente (b), bestehend aus

    (b1) 1,25 bis 15, vorzugsweise 2 bis 7 Gew.-% eines mindestens eine Carboxylgruppe pro Molekül tragenden, mit (a1), (a2), (a3) und (b2) copolymerisierbaren, ethylenisch ungesättigten Monomeren oder eines Gemisches aus solchen Monomeren und
    (b2) 0 bis 60, vorzugsweise 0 bis 28 Gew.-% eines carboxylgruppenfreien, mit (a1), (a2), (a3) und (b1) copolymerisierbaren, ethylenisch ungesättigten Monomers oder eines Gemisches aus solchen Monomeren

nacheinander oder in Teilmengen alternierend zu einem organischen Lösemittel oder Lösemittelgemisch gegeben werden und in Gegenwart mindestens eines Polymerisationsinitiators polymerisiert werden und
(II)

nach Beendigung der Polymerisation das erhaltene Polyacrylatharz zumindest teilweise neutralisiert und in Wasser dispergiert wird, wobei die Summe der Gewichtsanteile von (a1), (a2), (a3), (b1) und (b2) stets 100 Gew.-% ergibt, die Teilmengen jeweils aus mindestens 10 Gew.-% der insgesamt einzusetzenden Menge an Komponente (a) bzw. Komponente (b) bestehen, mit der Zugabe der Komponente (b) erst dann begonnen wird, wenn mindestens 60 Gew.-% der Komponente (a) umgesetzt worden sind bzw. mit der Zugabe einer Teilmenge erst dann begonnen wird, wenn mindestens 60 Gew.-% der vorhergehenden Teilmenge umgesetzt worden sind, (a1), (a2), (a3), (b1) und (b2) in Art und Menge so ausgewählt werden, daß das Polyacrylatharz eine Hydroxylzahl von 60 bis 180, vorzugsweise 80 bis 160, eine Säurezahl von 10 bis 100, vorzugsweise 15 bis 40 und eine Glasübergangstemperatur ($T_G$) von -40°C bis +60°C, vorzugsweise -20°C bis +40°C aufweist, und der Anteil an (Meth)acrylsäureestern, die von Hydroxyl- und Carboxylgruppen verschiedene funktionelle Gruppen enthalten, 7 Gew.-% bezogen auf die Summe der Gewichtsanteile von (a1), (a2), (a3) (b1) und (b2) nicht überschreitet.

Wäßrige Lacke, die das wasserverdünnbare Polyacrylatharz (A) enthalten, sind aus der DE-OS-38 32 826 und DE-OS-38 34 738 bekannt. Die in der DE-OS-38 32 826 und DE-OS-38 34 738 offenbarten Lacke sind jedoch hinsichtlich ihrer Neigung zur Kocherbildung verbesserungsbedürftig.

Im folgenden werden die Komponenten der erfindungsgemäßen Lacke näher beschrieben.

Das wasserverdünnbare Polyacrylatharz (A) ist erhältlich, indem

(I)

eine Komponente (a), bestehend aus

(a1) 40 bis 86,75, vorzugsweise 40 bis 80 Gew.-% eines von (a2) verschiedenen und mit (a2), (a3), (b1) und (b2) copolymerisierbaren, im wesentlichen carboxylgruppenfreien (Meth)acrylsäureesters oder eines Gemisches aus solchen (Meth)acrylsäureestern und

(a2) 12 bis 50, vorzugsweise 16 bis 45 Gew.-% eines mit (a1), (a3), (b1) und (b2) copolymerisierbaren, ethylenisch ungesättigten Monomeren, das mindestens eine Hydroxylgruppe pro Molekül trägt und im wesentlichen carboxylgruppenfrei ist oder eines Gemisches aus solchen Monomeren und

(a3) 0 bis 25, vorzugsweise 0 bis 20 Gew.-% eines mit (a1), (a2), (b1) und (b2) copolymerisierbaren, im wesentlichen carboxylgruppenfreien, von (a1) und (a2) verschiedenen, ethylenisch ungesättigten Monomeren oder eines Gemisches aus solchen Monomeren

und eine Komponente (b), bestehend aus

(b1) 1,25 bis 15, vorzugsweise 2 bis 7 Gew.-% eines mindestens eine Carboxylgruppe pro Molekül tragenden, mit (a1), (a2), (a3) und (b2) copolymerisierbaren, ethylenisch ungesättigten Monomeren oder eines Gemisches aus solchen Monomeren und

(b2) 0 bis 60, vorzugsweise 0 bis 28 Gew.-% eines carboxylgruppenfreien, mit (a1), (a2), (a3) und (b1) copolymerisierbaren, ethylenisch ungesättigten Monomers oder eines Gemisches aus solchen Monomeren

nacheinander oder in Teilmengen alternierend zu einem organischen Lösemittel oder Lösemittelgemisch gegeben werden und in Gegenwart mindestens eines Polymerisationsinitiators polymerisiert werden und

(II)

nach Beendigung der Polymerisation das erhaltene Polyacrylatharz zumindest teilweise neutralisiert und in Wasser dispergiert wird, wobei die Summe der Gewichtsanteile von (a1), (a2), (a3), (b1) und (b2) stets 100 Gew.-% ergibt, die Teilmengen jeweils aus mindestens 10 Gew.-% der insgesamt einzusetzenden Menge an Komponente (a) bzw. Komponente (b) bestehen, mit der Zugabe der Komponente (b) erst dann begonnen wird, wenn mindestens 60 Gew.-% der Komponente (a) umgesetzt worden sind bzw. mit der Zugabe einer Teilmenge erst dann begonnen wird, wenn mindestens 60 Gew.-% der vorhergehenden Teilmenge umgesetzt worden sind, (a1), (a2), (a3), (b1) und (b2) in Art und Menge so ausgewählt werden, daß das Polyacrylatharz eine Hydroxylzahl von 60 bis 180, vorzugsweise 80 bis 160, eine Säurezahl von 10 bis 100, vorzugsweise 15 bis 40 und eine Glasübergangstemperatur ($T_G$) von -40°C bis +60°C, vorzugsweise -20°C bis +40°C aufweist, und der Anteil an (Meth)acrylsäureestern, die von Hydroxyl- und Carboxylgruppen verschiedene funktionelle Gruppen enthalten, 7 Gew.-% bzw. auf die Summe der Gewichtsteile von (a1), (a2), (a3), (b1) und (b2) nicht überschreitet. Bevor die Herstellung der wasserverdünnbaren Polyacrylatharze näher beschrieben wird, werden zwei Begriffsklärungen vorausgeschickt:

1.) Als Abkürzung für "Methacrylsäure- oder Acrylsäure-" wird gelegentlich "(Meth)acrylsäure-" verwendet.

2.) Die Formulierung "im wesentlichen carboxylgruppenfrei" soll ausdrücken, daß die Komponenten (a1), (a2), und (a3) einen geringen Carboxylgruppengehalt (höchstens aber soviel, daß ein aus den Komponenten (a1), (a2) und (a3) hergestelltes Polyacrylatharz eine Säurezahl von höchstens 10 hat) aufweisen können. Es ist aber bevorzugt, daß der Carboxylgehalt der Komponenten (a1), (a2) und (a3) so niedrig wie möglich gehalten wird. Besonders bevorzugt werden carboxylgruppenfreie (a1), (a2) und (a3) Komponenten eingesetzt.

Als Komponente (a1) kann jeder mit (a2), (a3), (b1) und (b2) copolymerisierbare, im wesentlichen carboxylgruppenfreie Ester der (Meth)acrylsäure oder ein Gemisch aus solchen (Meth)acrylsäureestern eingesetzt werden. Als Beispiele werden Alkylacrylate und Alkylmethacrylate mit bis zu 20 Kohlenstoffatomen im Alkylrest, wie z.B. Methyl-, Ethyl-, Propyl-, Butyl-, Hexyl-, Ethylhexyl-, Stearyl- und Laurylacrylat und -methacrylat genannt. Als Komponente (a1) können auch Ethyltriglykol(meth)acrylat und Methoxyoligoglykol(meth)acrylat mit einem zahlenmittleren Moleklargewicht von vorzugsweise 550 oder andere ethoxylierte und/oder propoxylierte, hydroxylgruppenfreie (Meth)acrylsäurederivate eingesetzt werden. Als Komponente (a1) können auch (Meth)acrylsäureester, die funktionelle Gruppen - angenommen Hydroxylgruppen - enthalten oder Mischungen aus solchen (Meth)acrylsäureestern eingesetzt werden. Als Beispiele für solche funktionelle Gruppen enthaltende (Meth)acrylsäureester werden genannt: 2-tert. Butylaminoethyl(meth)acrylat, Dihydrodicyclopentadienyl(meth)acrylat, 1,3-Butandioldi(meth)arcylat, 1,6-Hexandioldimethacrylat, Triethylenglykoldi(meth)acrylat, Glycidyl(meth)acrylat, Allyl(meth)acrylat.

Wenn funktionelle Gruppen enthaltende (Meth)acrylsäureester als Komponente (a1) eingesetzt werden ist stets darauf zu achten, daß keine Gelierung auftritt. Deswegen sollte der Anteil an funktionelle Gruppen enthaltenden (Meth)acrylsäureestern 7, vorzugsweise 5, besonders bevorzugt 2,5 Gew.-% bezogen auf die Summe der Gewichtsanteile von (a1), (a2), (a3), (b1) und (b2) nicht überschreiten. Bevorzugt werden Gemische aus Alkylacrylaten und/oder Alkylmethacrylaten als (a1)-Komponente eingesetzt, die mindestens 25 Gew.-% n-Butyl- oder t-Butylacrylat und/oder n-Butyl- oder t-Butylmethacrylat enthalten.

Als Komponente (a2) können alle mit (a1), (a3), (b1) und (b2) copolymerisierbaren, ethylenisch ungesättigten Monomere, die mindestens eine Hydroxylgruppe pro Molekül tragen und im wesentlichen carboxylgruppenfrei sind oder ein Gemisch aus solchen Monomeren eingesetzt werden. Als Beispiele werden Hydroxyalkylester der Acrylsäure, Methacrylsäure, oder einer anderen α,ß-ethylenisch ungesättigten Carbonsäure genannt. Diese Ester können sich von einem Alkylenglykol ab1eiten, das mit der Säure verestert ist, oder sie können durch Umsetzung der Säure mit einem Alkylenoxid erhalten werden. Als Komponente (a2) werden vorzugsweise Hydroxyalkylester der Acrylsäure und Methacrylsäure, in denen die Hydroxyalkylgruppe bis zu 6 Kohlenstoffatome enthält, Umsetzungsprodukte aus cyklischen Estern, wie z.B. ε-caprolacton und diesen Hydroxyalkylestern oder Mischungen aus diesen Hydroxyalkylestern bzw. ε-caprolactonmodifizierten Hydroxyalkylestern eingesetzt. Als Beispiele für derartige Hydroxyalkylester werden 2-Hydroxyethyl-acrylat, 2-Hydroxypropylacrylat, 3-Hydroxypropyl-acrylat, 2-Hydroxypropylmethacrylat, 3-Hydroxypropylmethacrylat, 2-Hydroxyethylmethacrylat, 4-Hydroxybutylacrylat, 4-Hydroxybutylmethacrylat und Hydroxyhexylacrylat genannt. Entsprechende Ester von anderen ungesättigten Säuren, wie z.B. Ethacrylsäure, Crotonsäure und ähnlichen Säuren mit bis zu etwa 6 Kohlenstoffatomen pro Molekül, können auch eingesetzt werden.

Als Komponente (a3) können alle mit (a1), (a2), (b1) und (b2) copolymerisierbaren, im wesentlichen carboxylgruppenfreien, von (a1) und (a2) verschiedenen, ethylenisch ungesättigten Monomere oder Gemische aus solchen Monomeren eingesetzt werden. Als Komponente (a3) werden vorzugsweise vinylaromatische Kohlenwasserstoffe, wie Styrol, α-Alkylstyrol und Vinyltoluol eingesetzt.

Zur Herstellung der erfindungsgemäß einzusetzenden Polyacrylatharze kann als Komponente (b1) jedes mindestens eine Carboxylgruppe pro Molekül tragende, mit (b2), (a1), (a2) und (a3) copolymerisierbare, ethylenisch ungesättigte Monomer oder ein Gemisch aus solchen Monomeren eingesetzt werden. Als Komponente (b1) werden vorzugsweise Acrylsäure und/oder Methacrylsäure eingesetzt. Es können aber auch andere ethylenisch ungesättigte Säuren eingesetzt werden. Als Beispiele für solche Säuren werden Ethacrylsäure, Crotonsäure, Maleinsäure, Fumarsäure und Itaconsäure genannt. Als Komponente (b1) können z.B. auch Bernsteinsäuremono(meth)-acryloyloxiethylester und Phthalsäuremono(meth)-acryloyloxiethylester eingesetzt werden.

Als Komponente (b2) kann jedes mit (a1), (a2), (a3) und (b1) copolymerisierbare, carboxylgruppenfreie, ethylenisch ungesättigte Monomer oder ein Gemisch aus solchen Monomeren eingesetzt werden. Als Komponente (b2) können alle bei der Beschreibung der Komponenten (a1), (a2) und (a3) aufgezählten Monomere eingesetzt werden.

Die erfindungsgemäß eingesetzten Polyacrylatharze können hergestellt werden, indem die Komponente (a) zu einem organischen Lösemittel oder Lösemittelgemisch gegeben wird, dort in Gegenwart mindestens eines Polymerisationsinitiators polymerisiert wird und nach Beendigung der Zugabe der Komponente (a) die Komponente (b) zu dem organischen Lösemittel oder Lösemittelgemisch gegeben wird und dort in Gegenwart mindestens eines Polymerisationsinitiators polymerisiert wird. Mit der Zugabe der Komponente (b) sollte erst dann begonnen werden, wenn mindestens 60 Gew.-%, vorzugsweise mindestens 80 Gew.-% der Komponente (a) umgesetzt worden sind. Es ist besonders bevorzugt, mit der Zugabe der Komponente (b) erst dann zu beginnen, wenn die Komponente (a) im wesentlichen vollständig umgesetzt worden ist. Nach Beendigung der Polymerisation wird das erhaltene Polyacrylatharz zumindest teilweise neutralisiert und in Wasser dispergiert. Die Summe der Gewichtsanteile von (a1), (a2), (a3), (b1) und (b2) beträgt stets 100 Gew.-%. Die Komponenten (a1), (a2), (a3), (b1) und (b2) werden in Art und Menge so ausgewählt, daß das Polyacrylatharz eine Hydroxylzahl von 60 bis 180, vorzugsweise 80 bis 160, eine Säurezahl von 10 bis 100, vorzugsweise 15 bis 40 und eine Glasübergangstemperatur ($T_G$) von -40°C bis +60°C, vorzugsweise -20°C bis +40°C, aufweist.

Die Komponente (a) wird vorzugsweise innerhalb von 2 bis 8 Stunden, besonders bevorzugt innerhalb von 3 bis 6 Stunden zu dem organischen Lösemittel oder Lösemittelgemisch gegeben und dort in Gegenwart mindestens eines freie Radikale bildenden Initiators polymerisiert. Die Komponente (b) wird vorzugsweise innerhalb von 10 bis 90 Minuten, besonders bevorzugt innerhalb von 30 bis 90 Minuten zu dem organischen Lösemittel oder Lösemittelgemisch gegeben und dort in Gegenwart mindestens eines freie Radikale bildenden Initiators polymerisiert.

Die erfindungsgemäß einzusetzenden Polyacrylatharze können auch hergestellt werden, indem die Komponenten (a) und (b) in Teilmengen alternierend zu einem organischen Lösemittel oder Lösemittelgemisch gegeben werden und dort in Gegenwart mindestens eines freie Radikale bildenden Initiators polymerisiert werden. Die Teilmengen sollten dabei jeweils aus mindestens 10 Gew.-% der ingesamt einzusetzenden Menge an Komponente (a) bzw. Komponente (b) bestehen. Mit der Zugabe einer Teilmenge sollte erst dann begonnen werden, wenn mindestens 60 Gew.-%, vorzugsweise mindestens 80 Gew.-% der vorhergehenden Teilmenge umgesetzt worden sind. Es ist besonders bevorzugt, mit der Zugabe einer Teilmenge erst dann zu beginnen, wenn die vorhergehende Teilmenge im wesentlichen vollständig umgesetzt worden ist. Nach Beendigung der Polymerisation wird das erhaltene Polyacrylatharz zumindest teilweise neutralisiert und in Wasser dispergiert. Die Summe der Gewichtsanteile von (a1), (a2), (a3), (b1) und (b2) beträgt stets 100 Gew.-%. Die Komponenten (a1), (a2), (a3), (b1) und (b2) werden in Art und Menge so ausgewählt, daß das Polyacrylatharz eine Hydroxylzahl von 60 bis 180, vorzugsweise 80 bis 160, eine Säurezahl von 10 bis 100, vorzugsweise 15 bis 40 und eine Glasübergangstemperatur ($T_G$) von -40°C bis +60°C, vorzugsweise -20°C bis +40°C, aufweist.

In einer bevorzugten Ausführungsform dieses Herstellungsverfahrens wird in einem ersten Schritt eine aus 30 bis 70 Gew.-%, vorzugsweise eine aus 40 bis 60 Gew.-%, besonders bevorzugt eine aus 50 Gew.-% der insgesamt einzusetzenden Menge an Komponente (a) bestehende Teilmenge der Komponente (a) (Teilmenge 1) zu dem organischen Lösemittel oder Lösemittelgemisch gegeben und in Gegenwart mindestens eines freie Radikale bildenden Initiators polymerisiert. Nach Beendigung der Zugabe der Teilmenge 1 wird in einem zweiten Schritt eine aus 30 bis 70 Gew.-%, vorzugsweise eine aus 40 bis 60 Gew.-%, besonders bevorzugt eine aus 50 Gew.-% der insgesamt einzusetzenden Menge an Komponente (b) bestehende Teilmenge der Komponenten (b) (Teilmenge 2) zu dem organischen Lösemittel oder Lösemittelgemisch gegeben und in Gegenwart mindestens eines freie Radikale bildenden Initiators polymerisiert. Nach Beendigung der Zugabe der Teilmenge 2 wird in einem dritten Schritt eine aus 30 bis 70 Gew.-%, vorzugsweise eine aus 40 bis 60 Gew.-%, besonders bevorzugt eine aus 50 Gew.-% der insgesamt einzusetzenden Menge an Komponente (a) bestehende Teilmenge der Komponenten (a) (Teilmenge 3) zu dem organischen Lösemittel oder Lösemittelgemisch gegeben und in Gegenwart mindestens eines freie Radikale bildenden Initiators polymerisiert. Nach Beendigung der Zugabe der Teilmenge 3 wird in einem vierten Schritt eine aus 30 bis 70 Gew.-%, vorzugsweise eine aus 40 bis 60 Gew.-%, besonders bevorzugt eine aus 50 Gew.-% der insgesamt einzusetzenden Menge an Komponente (b) bestehende Teilmenge der Komponente (b) (Teilmenge 4) zu dem organischen Lösemittel oder Lösemittelgemisch gegeben und in Gegenwart mindestens eines freie Radikale bildenden Initiators polymerisiert.

Mit der Zugabe der Teilmengen 2, 3 und 4 sollte erst dann begonnen werden, wenn mindestens 60 Gew.-%, vorzugsweise mindestens 80 Gew.-% der jeweils vorgehenden Teilmenge umgesetzt worden sind. Es ist besonders bevorzugt, mit der Zugabe einer Teilmenge erst dann zu beginnen, wenn die vorgehende Teilmenge bis zu einem Restmonomerengehalt von höchstens bis zu etwa 0,5 Gew.-%, bezogen auf das Gewicht der Reaktionsmischung, umgesetzt worden ist.

Nach Beendigung der Polymerisation wird das erhaltene Polyacrylatharz zumindest teilweise neutralisiert und in Wasser dispergiert. Die Summe der Gewichtsanteile von (a1), (a2), (a3), (b1) und (b2) beträgt stets 100 Gew.-%. Die Komponenten (a1), (a2), (a3), (b1) und (b2) werden in Art und Menge so ausgewählt, daß das Polyacrylatharz eine Hydroxylzahl von 60 bis 180, vorzugsweise 80 bis 160, eine Säurezahl von 10 bis 100, vorzugsweise 15 bis 40 und eine Glasübergangstemperatur ($T_G$) von -40°C bis +60°C, vorzugsweise -20°C bis +40°C, aufweist.

Die Zugabe der Teilmengen 1 und 3 erfolgt vorzugsweise innerhalb von 1 bis 4 Stunden, besonders bevorzugt innerhalb von 1 1/2 bis 3 Stunden. Die Zugabe der Teilmengen 2 und 4 erfolgt vorzugsweise innerhalb von 5 bis 45 Minuten, besonders bevorzugt innerhalb von 15 bis 45 Minuten.

Die erfindungsgemäß eingesetzten Polyacrylatharze können auch hergestellt werden, indem die Komponente (b) vor der Komponente (a) bzw. Teilmengen der Komponente (b) vor Teilmengen der Komponente (a) in analoger Art und Weise wie oben beschrieben polymerisiert werden.

Als organische Lösemittel und Polymerisationsinitiatoren werden die für die Herstellung von Polyacrylatharzen üblichen und für die Herstellung von wäßrigen Dispersionen geeigneten Lösemittel und Polymerisationsinitiatoren eingesetzt. Als Beispiele für brauchbare Lösemittel werden Butylglykol, Methoxypropanol, n-Butanol, Methoxybutanol, Ethoxypropanol, n-Propanol, Ethylenglykolmonomethylether, Ethylenglykolmonoethylether, Ethylenglykolmonobutylether, Diethylenglykolmonomethylether, Diethylenglykolmonoethylether, Diethylenglykoldiethylether, Diethylenglykolmonobutylether, Dipropylenglycoldimethylesther, Dipropylenglycolmonomethylether, Propylenglykol-n-butylether, Tripropylenglykolmonomethylether und 3-Methyl-3-methoxybutanol genannt. Als Beispiele für brauchbare Polymerisationsinitiatoren werden freie Radikale bildende Initiatoren, wie z.B. Benzoylperoxid, t-Butylperethylhexanoat, Azobisisobutyronitril und t-Butylperbenzoat genannt. Die Polymerisation wird zweckmäßigerweise bei einer Temperatur von 80 bis 160°C, vorzugsweise 110 bis 160°C durchgeführt. Die Polymerisation ist beendet, wenn alle eingesetzten Monomeren bis zu einem Restmonomerengehalt von höchstens bis zu etwa 0,5 Gew.-%, bezogen auf das Gewicht der Reaktionsmischung, umgesetzt worden sind.

Die Komponenten (a1), (a2), (a3), (b1) und (b2) werden in Art und Menge so ausgewählt, daß das Reaktionsprodukt eine Hydroxylzahl von 60 bis 180, vorzugsweise 80 bis 160, eine Säurezahl von 10 bis 100, vorzugsweise 15 bis 40 und eine Glasübergangstemperatur ($T_G$) von -40°C bis + 60°C, vorzugsweise -20°C bis +40°C, aufweist.

Die Glasübergangstemperaturen von Polyacrylatharzen können näherungsweise nach folgender Formel berechnet werden:

$$\frac{1}{T_G} \qquad \sum_{n=1}^{n=x} \qquad \frac{W_n}{T_{Gn}}$$

$T_G$      = Glasübergangstemperatur des Polyacrylatharzes
x      = Anzahl der im Polyacrylatharz einpolymerisierten verschiedenen Monomeren.
$W_n$      = Gewichtsanteil des n-ten Monomers
$T_{Gn}$      = Glasübergangstemperatur des Homopolymers aus dem n-ten Monomer

Die Menge und Zugabegeschwindigkeit des Initiators wird vorzugsweise so gesteuert, daß das erhaltene Polyacrylatharz ein zahlenmittleres Molekulargewicht von 2000 bis 20 000 aufweist (gelpermeationschromatographische Bestimmung unter Verwendung eines Polystyrolstandards). Es ist besonders bevorzugt, die Initiatorzugabe zum gleichen Zeitpunkt wie die Zugabe der polymerisierbaren Komponenten (a) und (b) zu beginnen und etwa eine halbe Stunde nachdem die Zugabe der polymerisierbaren Komponenten (a) und (b) beendet worden ist, zu beenden. Danach wird das Reaktionsgemisch noch so lange (in der Regel etwa 1 1/2 Stunden) auf Polymerisationstemperatur gehalten, bis alle eingesetzten Monomere im wesentlichen vollständig umgesetzt worden sind. "Im wesentlichen vollständig umgesetzt" soll bedeuten, daß vorzugsweise 100 Gew.-% der eingesetzten Monomere umgesetzt worden sind, daß es aber auch möglich ist, daß ein geringer Restmonomerengehalt von höchstens bis zu etwa 0,5 Gew.-%, bezogen auf das Gewicht der Reaktiosmischung, unumgesetzt zurückbleiben kann.

Nach Beendigung der Polymerisation wird das erhaltene Polyacrylatharz zumindest teilweise neutralisiert und in Wasser dispergiert. Dabei entsteht eine wäßrige Polyacrylatharzdispersion. Gegebenenfalls kann ein Teil oder das gesamte organische Lösemittel abdestilliert werden. Die erfindungsgemäß eingesetzten Polyacrylatharzdispersionen enthalten Polyacrylatharzteilchen, deren mittleren Teilchengröße vorzugsweise zwischen 60 und 300 nm liegt. (Meßmethode: Laserlichtstreuung, Meßgerät: Malvern Autosizer 2C).

Zur Neutralisation des Polyacrylatharzes können sowohl organische Basen als auch anorganische Basen verwendet werden. Vorzugsweise werden primäre, sekundäre und tertiäre Amine, wie z.B. Ethylamin, Propylamin, Dimethylamin, Dibutylamin, Cyclohexylamin, Benzylamin, Morpholin, Piperidin und Triethanolamin verwendet. Besonders bevorzugt werden tertiäre Amine als Neutralisationsmittel eingesetzt, insbesondere Dimethylethanolamin, Triethylamin, Tripropylamin und Tributylamin.

Als Komponente (B) können im Prinzip alle in der wäßrigen Dispersion des Polyacrylatharzes (A) dispergierbaren blockierten Polyisocyanate oder Mischungen aus blockierten Polyisocyanaten eingesetzt werden.

Blockierte Polyisocyanate sind bekannte Vernetzungsmittel für Lacke, die im allgemeinen durch Umsetzung eines Polyisocyanates mit einem Blockierungsmittel oder einem Blockierungsmittelgemisch herstellbar sind. Dabei werden die Isocyanatgruppen des Polyisocyanats durch Reaktion mit dem Blockierungsmittel blockiert und erst beim Einbrennen des Lackes nach Abspaltung des Blockierungsmittels wieder freigelegt und stehen dann für die Vernetzungsreaktion mit den gegenüber Isocyanatgruppen reaktiven Gruppen in den anderen Bindemittelbestandteilen, wie z.B. im Polyacrylatharz (A) zur Verfügung.

Als Polyisocyanate zur Herstellung der blockierten Polyisocyanate können im Prinzip alle für Lacke geeigneten Polyisocyanate eingesetzt werden. Als Beispiele werden genannt: Polyisocyanate mit 4 bis 25, vorzugsweise 4 bis 16 C-Atomen und 2 bis 4, vorzugsweise 2 Isocyanatgruppen pro Molekül, also aliphatische, cycloaliphatische, araliphatische und aromatische Diisocyanate, wie sie beispielsweise in "Methoden der Organischen Chemie" (Houben-Weyl), Bd. 14/2, 4. Aufl., Georg Thieme Verlag, Stuttgart 1963, S. 61-70, und von W. Siefken, Liebigs Ann. Chem. 562, 75-136, beschrieben werden, z.B. 1,2 Ethylendiiscyanat, 1,4-Tetramethylendiisocyanat, 1,6-Hexamethylendiisocyanat, 2,2,4- bzw. 2,4,4-Trimethyl-1,6-hexamethylendiisocyanat, 1,12-Dodecandiisocyanat, w, w'-Diisocyanatodipropylether, Cyclobutan-1,3-diisocyanat, Cyclohexan-1,3- und -1,4-diisocyanat, 2,2- und 2,6-Diisocyanato-1-methylcyclohexan, 3-Isocyanatomethyl-3,5,5-trimethylcyclohexylisocyanat ("Isophorondiisocyanat), 2,5- und 3,5-Bis-(isocyanatomethyl)-8-methyl-1,4-methano-decahydronapthalin, 1,5-, 2,5-, 1,6- und 2,6-Bis(isocyanatomethyl)-4,7-methano-hexahydroindan, 1,5-, 2,5-, 1,6- und 2,6-Bis(isocyanato)-4,7-methanohexahydroindan, Dicyclohexyl-2,4' und 4,4'-diisocyanat, 2,4- und 2,6 Hexahydrotoluylendiisocyanat, Perhydro-2,4'- und -4,4'-diphenylmethandiisocyanat, w, w'-Diisocyanato-1,4-diethylbenzol, 1,3- und 1,4-Phenylendiisocyanat, 4,4'-Diisocyanatodiphenyl, 4,4'-Diisocyanato-3,3'-dichlordiphenyl, 4,4'-Diisocyanato-3,3'-dimethoxy-diphenyl, 4,4'-Diisocyanato3,3'-dimethyl-diphenyl, 4,4'-Diisocyanato-3,3'-diphenyl-diphenyl, 2,4'- und 4,4'-Diisocyanatodiphenylmethan, Naphthylen-1,5-diisocyanat, Toluylendiisocyanate wie 2,4- bzw. 2,6-Toluylen-diisocyanat, N,N'-(4,4'-Dimethyl-3,3'-Diisocyanatodiphenyl)-uretdion, m-Xylylen-diisocyanat, Dicyclohexylmethandiisocyanat, Tetramethylxylylendiisocyanat, aber auch Triisocyanate, wie 2,4,4'-Triisocyanatodiphenylether, 4,4',4"-Triisocyanatotriphenylmethan. Es können auch Carbodiimidgruppen und/oder Isocyanuratgruppen und/oder Biuretgruppen und/oder Urethangruppen und/oder Harnstoffgruppen und/oder Carboxylgruppen aufweisende Polyisocyanate eingesetzt werden.

Urethangruppen aufweisende Polyisocyanate werden beispielsweise durch Umsetzung eines Teils der Isocyanatgruppen mit Polyolen, wie z.B. Trimethylolpropan, Glycerin, Polyesterpolyolen und Polyetherpolyolen erhalten. Carboxylgruppenhaltige Polyisocyanate können beispielsweise durch Umsetzung eines Teils der Isocyanatgruppen mit carboxylgruppenhaltigen Verbindungen wie z. B. Dimethylolpropionsäure oder anderen Hydroxycarbonsäuren oder Carboxylgruppen und Hydroxylgruppen enthaltenden Polyestern erhalten werden. Für die Herstellung von Automobildecklacken werden vorzugsweise aliphatische oder cycloaliphatische Polyisocyanate, insbesondere Hexamethylendiisocyanat, dimerisiertes Hexamethylendiisocyanat, trimerisiertes Hexamethylendiisocyanat, Isophorondiisocyanat, Dicyclohexylmethan-2,4'-diisocyanat und Dicyclohexylmethan-4,4'diisocyanat oder Mischungen aus diesen Polyisocyanaten eingesetzt. Ganz besonders bevorzugt wird trimerisiertes Hexamethylendiisocyanat eingesetzt. Trimerisiertes Hexamethylendiisocyanat ist ein Handelsprodukt, das beispielsweise unter den Handelsnamen Tolunate® HDT (Rhône-Poulenc), Desmodur® N33 (Bayer AG) und Basonat® PLR 8638 (BASF AG) verkauft wird.

Die in Rede stehenden Polyisocyanate können im Prinzip mit jedem für die Blockierung von Polyisocyanaten geeigneten Blockierungsmitteln oder Mischungen aus Blockierungsmitteln blockiert werden. Geeignete Blockierungsmittel enthalten im allgemeinen eine Amin-, Amid-, Lactam-, Thiol- oder Hydroxylgruppe oder eine C-H-acide Gruppierung. Als Beispiele werden genannt: aliphatische, cycloaliphatische oder araliphatische Monoalkohole, wie Methyl-, Ethyl-, Propyl-, Butyl-, Amyl-, Hexyl-, Heptyl-, Octyl-, Nonyl-, 3,3,5-Trimethylhexyl-, Decyl-, 2-Ethylhexyl- und Laurylalkohol, Ethylglykolmonoethylether, Ethylglykolmonobutylether, Cyclopentanol, Cyclohexanol, Phenylcarbinol und Methylphenylcarbinol, Oxime, wie Methylamylketoxim, Diisobutylketoxim, Methylethylketoxim, Methylisobutylketoxim, Acetonoxim und Cyclohexanonoxim, Dialkylaminoalkohole, wie Dimethylethanolamin und Diethylethanolamin, Phenole, wie Kresol, Phenol, t-Butylphenol und Ethylphenol, Lactame, wie ε-caprolactam, Imide, wie Phthalimid sowie Malonsäure- oder Acetessigester.

Der Fachmann kann die geeigneten Blockierungsmittel unter Berücksichtigung der Tatsache, daß die blockierten Polyisocyanate vor Beginn des Einbrennvorgangs keine chemischen Reaktion mit anderen Lackbestandteilen eingehen sollen, nach Beendigung des Einbrennvorgangs aber möglichst vollständig mit den isocyanatreaktiven Bindemitteln abreagiert haben sollen aus den bekannten, für die Blockierung von Polyisocyanaten geeigneten Blockierungsmitteln auswählen.

Bevorzugt eingesetzte Blockierungsmittel sind Methylethylketoxim, Methylamylketoxim, Diisobutylketoxim und Diethylmalonester. Besonders bevorzugt eingesetzte Blockierungsmittel sind Methylethylketoxim und Diethylmalonester.

Es können auch Mischungen aus unterschiedlichen Blockierungsmitteln eingesetzt werden.

In manchen Fällen kann es vorteilhaft sein, dem Lack einen Katalysator für die Reaktion der Isocyanatgruppen des blockierten Isocyanats mit den isocyanatreaktiven Gruppen, insbesondere Hydroxylgruppen der anderen Bindemittelbestandteile zuzugeben. Geeignete Katalysatoren sind beispielsweise Zinnverbindungen, wie Dibutylzinndilaurat und Zinnacetat.

Der Gehalt an blockiertem Polyisocyanat ist im allgemeinen so hoch, daß das Verhältnis zwischen OH-Äquivalenten und NCO-Äquivalenten zwischen 1,0:0,7 und 1,0:1,2, bevorzugt zwischen 1,0:0,8 und 1,0:1,0 liegt.

In manchen Fällen ist es vorteilhaft, neben der Komponente (B) auch noch ein Aminoplastharz oder eine Mischung aus Aminoplastharzen als weiteres Vernetzungsmittel (Komponente (C)) einzusetzen. Derartige Aminoplastharze sind gut bekannt und werden von vielen Firmen als Verkaufsprodukte (z.B. Cymel® von American Cyanamid Company, Resimene® der Monsanto Company und Luwipal® der BASF AG) angeboten. Es handelt sich in der Regel um wenigstens teilweise veretherte Kondensationsprodukte aus aminogruppenhaltigen Verbindungen, insbesondere Melamin oder Benzoguanamin und Aldehyden, insbesondere Formaldehyd. Die Wasserverdünnbarkeit der Aminoplastharze hängt im allgemeinen vom Kondensationsgrad und von der Veretherungskomponente ab. Je niedriger der Kondensationsgrad und je kurzkettiger die Alkylgruppen in der Veretherungskomponente sind, desto besser ist die Wasserverdünnbarkeit der Aminoplastharze. Die Wasserverdünnbarkeit von Aminoplastharzen kann auch durch Einführung von Carboxylgruppen (z.B. Veretherung mit Hydroxycarbonsäuren) verbessert werden. Außerdem kann die Wasserverdünnbarkeit von Aminoplastharzen durch Zusatz von wasserverdünnbaren Lösemitteln, wie z.B. Glykolether verbessert werden.

Wenn in den erfindungsgemäßen Lacken eine Kombination aus blockierten Polyisocyanaten und Aminoplastharzen eingesetzt wird, dann liegt das Gewichtsverhältnis von eingesetztem blockierten Polyisocyanat zu eingesetztem Aminoplastharz zwischen 20:80 und 80:20, vorzugsweise zwischen 67:33 und 33:67. Das Verhältnis zwischen dem Gewicht der Mischung aus blockiertem Polyisocyanat und Aminoplastharz zum Gewicht der übrigen Bindemittelbestandteile beträgt im allgemeinen 50:50 bis 10:90, vorzugsweise 40:60 bis 20:80.

Es können auch blockierte Polyisocyanate als Komponente (B) eingesetzt werden, die in wäßrigen Medien nur für begrenzte Zeit stabil sind. In diesem Fall ist es vorteilhaft, die erfindungsgemäßen Lacke als Zweikomponentensysteme einzusetzen, d. h. die Polyisocyanatkomponente erst kurz vor oder während der Applikation mit der wäßrigen Lackkomponente zu vermischen.

Neben den oben beschriebenen Bindemitteln können die erfindungsgemäßen Lacke noch weitere wasserverdünnbare Kunstharze, die gegebenenfalls zum Anreiben der Pigmente und/oder als rheologiesteuernde Additive dienen können, enthalten. Als Beispiele für solche Kunstharze werden genannt: wasserverdünnbare Polyurethanharze, wasserverdünnbare Polyesterharze, Polyether, wie z.B. Polypropylenglykol mit einem zahlenmittleren Molekulargewicht von 400 bis 900, wasserlösliche Celluloseether, wie Hydroxyethylcellulose, Methylcellulose oder Carboxymethylcellulose sowie synthetische Polymere mit ionischen und/oder assoziativ wirkenden Gruppen, wie Polyvinylalkohol, Poly(meth)acrylamid, Poly(meth)acrylsäure, Polyvinylpyrrolidon, Styrol-Maleinsäureanhydrid oder Ethylen-Maleinsäureanhydrid-Copolymere und ihre Derivate oder auch hydrophob modifizierte ethoxylierte Urethane oder carboxylgruppenhaltige Polyacrylate.

Die erfindungsgemäßen Lacke können auch vernetzte Polymikroteilchen, wie sie z.B. in der EP-A-38 127 offenbart sind, enthalten.

Die erfindungsgemäßen Lacke können auch anorganische Rheologiesteuerungsmittel, wie z.B. Schichtsilikate enthalten.

Die erfindungsgemäßen wäßrigen Lacke können auch übliche organische Lösemittel enthalten. Deren Anteil wird möglichst gering gehalten. Er liegt beispielsweise unter 15 Gew.-% bezogen auf den Gesamtgehalt an flüchtigen Bestandteilen.

Die erfindungsgemäßen Lacke werden im allgemeinen auf einen pH-Wert zwischen 6,5 und 9,0 eingestellt. Der pH-Wert kann mit üblichen Aminen, wie z.B. Triethylamin, Dimethylaminoethanol und N-Methylmorpholin eingestellt werden.

Die erfindungsgemäßen Lacke können durch übliche Applikationsmethoden, wie z.B. Spritzen, Rakeln, Streichen, Tauchen, auf beliebige Substrate, wie z.B. Metall, Holz, Kunststoff oder Papier aufgebracht werden.

Die erfindungsgemäßen Lacke werden vorzugsweise zur Herstellung von Automobildecklackierungen eingesetzt. Die erfindungsgemäßen Lacke können sowohl bei der Serien- als auch bei der Reparaturlackierung von Automobilkarosserien eingesetzt werden. Sie werden vorzugsweise bei der Serienlackierung von Automobilkarosserien eingesetzt.

Automobildecklackierungen werden in einem Verfahren hergestellt, bei dem auf mit wenigstens einer Elektrotauchlackschicht und wenigstens einer darüber aufgebrachten Füllerschicht beschichtete Karosserien entweder ein pigmentierter Decklack aufgebracht und eingebrannt wird (einschichtige Decklackierung) oder ein pigmentierter Basislack und darüber ein unpigmentierter oder nur transparent pigmentierter Klarlack aufgebracht und anschließend die Basislackschicht zusammen mit der Klarlackschicht eingebrannt wird (zweischichtige Decklackierung).

Die erfindungsgemäßen Lacke können zur Herstellung einschichtiger Decklackierungen, als pigmentierte Basislacke oder als Klarlacke eingesetzt werden. Die erfindungsgemäßen Lacke werden vorzugsweise als Klarlacke eingesetzt.

Wenn die erfindungsgemäßen Lacke zur Herstellung von einschichtigen Decklackierungen oder als Basislacke eingesetzt werden, dann können sie mit Pigmenten wie z. B. Pigmenten auf anorganischer Basis, wie z.B. Titandioxid, Eisenoxid, Ruß usw. und/oder Pigmenten auf organischer Basis und/oder Metallpigmenten, wie z.B. Aluminiumbronzen und/oder Perlglanz- bzw. Interferenzpigmenten pigmentiert werden. Aluminiumbronzen und Perlglanz- bzw. Interferenzpigmente sind Beispiele für Effektpigmente.

Wenn die erfindungsgemäßen Lacke als pigmentierte Basislacke eingesetzt werden, dann können sie mit erfindungsgemäßen Lacken, die keine Pigmente enthalten oder nur transparent pigmentiert sind, überlackiert werden, sie können aber auch mit konventionellen Klarlacken auf Basis organischer Lösemittel, mit wäßrigen Klarlacken oder auch Pulverklarlacken überlackiert werden.

Die erfindungsgemäßen Lacke weisen insbesondere den Vorteil auf, daß sie eine verringerte Neigung zur Kocherbildung aufweisen.

In den folgenden Beispielen wird die Erfindung näher erläutert.

Alle Angaben über Teile und Prozentsätze sind Gewichtsangaben, soweit nicht ausdrücklich etwas anderes festgestellt wird.

1. Herstelluna eines wasserverdünnbaren Polyacrylatharzes (A) nach Beispiel A. der DE-OS-38 32 826

In einem 4 l Stahlkessel, ausgestattet mit zwei Monomerzuläufen, einem Initiatorzulauf, Rührer, Thermometer, Ölheizung und Rückflußkühler werden 20 Gew.-Teile Butylglykol vorgelegt und auf 140°C aufgeheizt. Dann wird eine Lösung von 4,5 Gew.-Teilen Butylperbenzoat in 5 Gew.-Teilen Butylglykol in einer solchen Geschwindigkeit zugegeben, daß die Zugabe nach 4 h, 30 min. abgeschlossen ist. Mit Beginn der Zugabe der Butylperbenzoatlösung wird auch mit der Zugabe einer Mischung aus 22,0 Gewichtsteilen Butylacrylat, 20,0 Gewichtsteilen Butylmethacrylat, 15,0 Gewichtsteilen Methylmethacrylat, 23,0 Gewichtsteilen 2-Hydroxypropylacrylat und 15,0 Gewichtsteilen Styrol begonnen. Die Mischung wird in einer solchen Geschwindigkeit zugegeben, daß die Zugabe nach 3 h, 50 min. abgeschlossen ist. Nachdem die Mischung vollständig zugegeben worden ist, werden 5,0 Gewichtsteile Acrylsäure innerhalb von 20 min. zugegeben. Die so erhaltene Harzlösung wird mit Dimethylethanolamin bei ca. 95°C bis zu einem Neutralisationsgrad von 80 % neutralisiert. Anschließend wird so viel Wasser zugegeben, daß der Feststoffgehalt der Dispersion etwa 60 Gew.-% beträgt. Die erhaltene Dispersion zeigt folgende Kennzahlen: Festkörper: 59,6 Gew.-% (1 h, 130°C), Säurezahl: 39,4, Teilchengröße: 143 nm (bestimmt über Laserlichtstreuung; Gerät: Malvern Autosizer 2C).

2. Herstellung eines wäßrigen Klarlackes nach der Lehre der DE-OS-38 32 826 (Klarlack I: Vergleichsbeispiel)

Zu 53,1 Gewichtsteilen der gemäß Punkt 1. hergestellten Dispersion werden unter Rühren 9,8 Gewichtsteile einer Mischung aus 9,4 Gewichtsteilen einer 90 gewichtsprozentigen Lösung eines handelsüblichen wasserverdünnbaren Melaminformaldehydharzes in Isobutanol (Cymel® 327) und 0,4 Gewichtsteilen einer 10 gewichtsprozentigen Lösung eines handelsüblichen Verlaufsmittels (Silwet® 7602) in Butylglykol zugegeben. Nach Beendigung der Zugabe wird noch 5 Minuten gerührt und unter Rühren mit 37,1 Gewichtsteilen deionisiertem Wasser langsam versetzt. Dann wird mit einer 10 gewichtsprozentigen wäßrigen Dimethylethanolaminlösung und deionisiertem Wasser auf einen pH-Wert von 7,8 und eine Spritzviskosität von 23 s Auslaufzeit aus DIN Becher 4 (DIN 53 211 (1974)) eingestellt. Der erhaltene Klarlack wird schließlich über einen Plattenfilter, bestückt mit Leitz Filterschicht T 1000 gefiltert. Applikationsfeststoffgehalt: 36,0 Gew.-% (1 h, 160°C).

3. Herstellung des blockierten Polyisocyanates (B)

In einem Stahlkessel, ausgestattet mit Zulaufgefäß, Rührer, Thermometer, Ölheizung und Rückflußkühler werden 33,33 Gewichtsteile Methylethylketon und 68,49 Gewichtsteile eines handelsüblichen, trimerisierten Hexamethylendiisocyanates vorgelegt und auf 60°C aufgeheizt. Dann werden 31,51 Gewichtsteile Methylethylketoxim innerhalb von 2 Stunden zugegeben. Die Temperatur wird so lange auf 60°C gehalten, bis der NCO-Gehalt < 0,25 Gew.-% beträgt. Anschließend werden die restlichen NCO-Gruppen mit einem zweifachen molaren Überschuß an Ethanol umgesetzt. 30 Minuten nach der Zugabe der entsprechenden Ethanolmenge werden 25 Gew.-Teile Butylglykol bei 70°C zugegeben und Methylethylketon abdestilliert. Das Reaktionsprodukt wird mit Butylglykol auf einen Feststoffgehalt von 75,1 Gew.-% (1 h, 150°C) eingestellt. Es wird eine Viskosität von 6,1 dPa s (Platte-Kegel-Viskosimeter bei 23°C) gemessen.

4. Herstellung eines erfindungsgemäßen Klarlackes (Klarlack II)

Es wird wie unter Punkt 2 beschrieben verfahren. Anstelle der Mischung aus Melaminformaldehydharzlösung und Verlaufsmittellösung werden jedoch 22,0 Gewichtsteile einer Mischung aus 21,6 Gewichtsteilen der nach Pkt. 3 erhaltenen Polyisocyanatlösung und 0,4 Gewichtsteilen der unter Pkt. 2 beschriebenen Verlaufsmittellösung eingesetzt. Applikationsfeststoffgehalt: 37,1 Gew.-% (1 h, 160°C).

5. Applikation der Klarlacke und Prüfung der erhaltenen Lackierungen

Auf mit einer handelsüblichen Elektrotauchlackierung und einem handelsüblichen Füller beschichtete phosphatierte Stahlbleche wird ein handelsüblicher, mit Aluminiumplättchen pigmentierter Wasserbasislack so appliziert, daß eine Trockenfilmdicke von 12 bis 15 μm erhalten wird. Der Basislackfilm wird 10 Minuten bei Raumtemperatur und 10 Minuten bei 80°C getrocknet. Auf die so lackierten Stahlbleche werden die Klarlacke I und II mit einer Fließbecherpistole in insgesamt 3 Aufträgen mit einer Zwischenablüftzeit von 1 Minute gespritzt, 20 Minuten bei Raumtemperatur getrocknet und 20 Minuten bei 160°C im Umluftofen eingebrannt. Die Klarlacke werden so gespritzt, daß Klarlackfilme erhalten werden, deren Trockenfilmdicke von 20 μm kontinuierlich bis auf 70 μm ansteigt (keilförmiger Schichtdickenverlauf). Die so erhaltenen Lackierungen wurden geprüft. Die Prüfergebnisse sind in der folgenden Tabelle zusammengefaßt.

| Lackierung mit Klarlack | I | II |
|---|---|---|
| Kochergrenze[1] | 43 μm | 63 μm |
| Glanz[2] | 90 | 90 |
| DOI | 80 | 86 |
| Gitterschnitt[3] | 0 | 0 |

[1] Unter Kochergrenze wird die Trockenfilmdicke verstanden, bis zu der keine auf Gasblasen zurückzuführende Störungen im Lackfilm beobachtet werden können. Wenn der Lack mit einer Trockenfilmdicke appliziert wird, die über der Kochergrenze liegt, dann treten auf Gasblasen zurückzuführende Störungen im Lackfilm auf.

[2] Glanzgrad nach DIN 67 530, Winkel 20°.

[3] Prüfung nach DIN 53 151, inklusive Tesaabriß-Test

Die oben beschriebenen Versuche zeigen, daß der erfindungsgemäße Einsatz eines blockierten Polyisocyanates anstelle eines Melaminformaldehydharzes sowohl eine verringerte Neigung zur Kocherbildung als auch eine Verbesserung des DOI-Wertes zur Folge hat.

**Patentansprüche**

1. Wäßrige Lacke, enthaltend

(A) ein wasserverdünnbares Polyacrylatharz und

(B) ein blockiertes Polyisocyanat oder eine Mischung aus blockierten Polyisocyanaten,

wobei das wasserverdünnbare Polyacrylatharz (A) erhältlich ist, indem

(I)
eine Komponente (a), bestehend aus

(a1) 40 bis 86,75 Gew.-% eines von (a2) verschiedenen und mit (a2), (a3), (b1) und (b2) copolymerisierbaren (Meth)acrylsäureesters oder eines Gemisches aus solchen (Meth)acrylsäureestern und

(a2) 12 bis 50 Gew.-% eines mit (a1), (a3), (b1) und (b2) copolymerisierbaren, ethylenisch ungesättigten Monomeren, das mindestens eine Hydroxylgruppe pro Molekül trägt oder eines Gemisches aus solchen Monomeren und

(a3) 0 bis 25 Gew.-% eines mit (a1), (a2), (b1) und (b2) copolymerisierbaren, von (a1) und (a2) verschiedenen, ethylenisch ungesättigten Monomeren oder eines Gemisches aus solchen Monomeren

und eine Komponente (b), bestehend aus

(b1) 1,25 bis 15 Gew.-% eines mindestens eine Carboxylgruppe pro Molekül tragenden, mit (a1), (a2), (a3) und (b2) copolymerisierbaren, ethylenisch ungesättigten Monomeren oder eines Gemisches aus solchen Monomeren und

(b2) 0 bis 60 Gew.-% eines carboxylgruppenfreien, mit (a1), (a2), (a3) und (b1) copolymerisierbaren, ethylenisch ungesättigten Monomers oder eines Gemisches aus solchen Monomeren

nacheinander oder in Teilmengen alternierend zu einem organischen Lösemittel oder Lösemittelgemisch gegeben werden und in Gegenwart mindestens eines Polymerisationsinitiators polymerisiert werden und

(II)
nach Beendigung der Polymerisation das erhaltene Polyacrylatharz zumindest teilweise neutralisiert und in Wasser dispergiert wird, wobei die Summe der Gewichtsanteile von (a1), (a2), (a3), (b1) und (b2) stets 100 Gew.-% ergibt, die Teilmengen jeweils aus mindestens 10 Gew.-% der insgesamt einzusetzenden Menge an Komponente (a) bzw. Komponene (b) bestehen, mit der Zugabe der Komponente (b) erst dann begonnen wird, wenn mindestens 60 Gew.-% der Komponente (a) umgesetzt worden sind bzw. mit der Zugabe einer Teilmenge erst dann begonnen wird, wenn mindestens 60 Gew.-% der vorhergehenden Teilmenge umgesetzt worden sind, (a1), (a2), (a3), (b1) und (b2) in Art und Menge so ausgewählt werden, daß das Polyacrylatharz eine Hydroxylzahl von 60 bis 180, eine Säurezahl von 10 bis 100 und eine Glasübergangstemperatur ($T_G$) von -40°C bis +60°C aufweist, (a1), (a2) und (a3) höchstens soviel Carboxylgruppen enthalten, daß ein aus den Komponenten (a1), (a2) oder (a3) hergestelltes Polyacrylatharz eine Säurezahl von höchstens 10 hat und der Anteil an (Meth)acrylsäureestern, die von Hydroxyl- und Carboxylgruppen verschiedene funktionelle Gruppen enthalten, 7 Gew.-%, bezogen auf die Summe der Gewichtsanteile von (a1), (a2), (a3), (b1) und (b2), nicht überschreitet.

2. Wäßrige Lacke nach Anspruch 1, dadurch gekennzeichnet, daß sie neben den Komponenten (A) und (B) auch noch ein Aminoplastharz oder eine Mischung aus Aminoplastharzen (Komponente (C)) enthalten, wobei das Gewichtsverhältnis von Komponente (B) zu Komponente (C) zwischen 20 : 80 und 80 : 20 liegt.

3. Wäßrige Lacke nach Anspruch 1 oder 2, dadurch gekennzeichnet, daß das wasserverdünnbare Polyacrylatharz (A) erhältlich ist, indem 40 bis 80 Gew.-% (a1), 16 bis 45 Gew.-% (a2), 0 bis 20 Gew.-% (a3), 2 bis 7 Gew.-% (b1) und 0 bis 28 Gew.-% (b2) eingesetzt werden und (a1), (a2), (a3), (b1) und (b2) in Art und Menge so ausgewählt werden, daß das Polyacrylatharz eine Hydroxylzahl von 80 bis 160, eine Säurezahl von 15 bis 40 und eine Glasübergangstemperatur ($T_G$) von -20°C bis + 40°C aufweist.

4. Verfahren zur Herstellung von Automobildecklackierungen, dadurch gekennzeichnet, daß ein wäßriger Lack nach einem der Ansprüche 1 bis 3 auf eine Schicht eines pigmentierten Basislackes aufgebracht und zusammen mit der Basislackschicht eingebrannt wird.

5. Verfahren zur Herstellung von Automobildecklackierungen nach Anspruch 4, dadurch gekennzeichnet, daß ein wäßriger Lack nach einem der Ansprüche 1 bis 3 auf eine Schicht eines mit Effektpigmenten oder einer Mischung aus Effektpigmenten pigmentierten Basislackes aufgebracht wird.

6. Verfahren zur Herstellung von Automobildecklackierungen, dadurch gekennzeichnet, daß ein pigmentierter wäßriger Lack nach einem der Ansprüche 1 bis 3 auf eine Füllerschicht aufgebracht und eingebrannt wird

7. Verwendung der wäßrigen Lacke nach einem der Ansprüche 1 bis 3 zur Herstellung von Automobildecklackierungen.

8. Verwendung der wäßrigen Lacke nach einem der Ansprüche 1 bis 3 zur Herstellung von Klarlackschichten zweischichtiger Lackierungen, bestehend aus einer pigmentierten Basislackschicht und einer Klarlackschicht.

**Claims**

1. Aqueous coatings comprising

   (A) a water-thinnable polyacrylate resin and
   (B) a blocked polyisocyanate or a mixture of blocked polyisocyanates,

   the water-thinnable polyacrylate resin (A) being obtainable by

   (I)
   adding a component (a) consisting of

   (a1) 40 to 86.75% by weight of a (meth)acrylic acid ester which differs from (a2), is copolymerizable with (a2), (a3), (b1) and (b2), or a mixture of such (meth)acrylic acid esters, and

(a2) 12 to 50% by weight of an ethylenically unsaturated monomer which is copolymerizable with (a1), (a3), (b1) and (b2), carries at least one hydroxyl group per molecule, or a mixture of such monomers, and

(a3) 0 to 25% by weight of an ethylenically unsaturated monomer which is copolymerizable with (a1), (a2), (b1) and (b2) and differs from (a1) and (a2), or a mixture of such monomers,

and a component (b) consisting of

(b1) 1.25 to 15% by weight of an ethylenically unsaturated monomer which carries at least one carboxyl group per molecule and is copolymerizable with (a1), (a2), (a3) and (b2), or a mixture of such monomers, and

(b2) 0 to 60% by weight of an ethylenically unsaturated monomer which is free from carboxyl groups and is copolymerizable with (a1), (a2), (a3) and (b1), or a mixture of such monomers,

successively or in portions in alternation to an organic solvent or solvent mixture and polymerizing these components in the presence of at least one polymerization initiator, and

(II)

when the polymerization has ended, at least partly neutralizing the resulting polyacrylate resin and dispersing it in water, the sum of the amounts by weight of (a1), (a2), (a3), (b1) and (b2) always giving 100% by weight, the portions each comprising at least 10 % by weight of the amount of component (a) or component (b) to be employed in total, the addition of component (b) only starting when at least 60 % by weight of component (a) has reacted or the addition of a portion only starting when at least 60 % by weight of the previous portion has reacted, the nature and amount of (a1), (a2), (a3), (b1) and (b2) being chosen such that the polyacrylate resin has a hydroxyl number of 60 to 180, an acid number of 10 to 100, and a glass transition temperature ($T_G$) of -40°C to +60°C, (a1), (a2) and (a3) containing at most sufficient carboxyl groups so that a polyacrylate resin prepared from components (a1), (a2) or (a3) has a maximum acid number of 10 and the proportion of (meth)acrylates containing functional groups other than hydroxyl and carboxyl groups does not exceed 7 % by weight, based on the total of the proportions by weight of (a1), (a2), (a3), (b1) and (b2).

2. Aqueous coatings according to Claim 1, characterized in that they also comprise an amino resin or a mixture of amino resins (component (C)), in addition to components (A) and (B), the weight ratio of component (B) to component (C) being between 20:80 and 80:20.

3. Aqueous coatings according to Claim 1 or 2, characterized in that the water-thinnable polyacrylate resin (A) is obtainable by employing 40 to 80% by weight of (a1), 16 to 45% by weight of (a2), 0 to 20% by weight of (a3), 2 to 7% by weight of (b1) and 0 to 28% by weight of (b2), and choosing the nature and amount of (a1), (a2), (a3), (b1) and (b2) such that the polyacrylate resin has a hydroxyl number of 80 to 160, an acid number of 15 to 40 and a glass transition temperature ($T_G$) of -20°C to +40°C.

4. Process for the production of automobile finishes, characterized in that an aqueous coating according to one of Claims 1 to 3 is applied to a layer of a pigmented base coating and this is baked together with the base coat.

5. Process for the production of automobile finishes according to Claim 4, characterized in that an aqueous coating according to one of Claims 1 to 3 is applied to a layer of a base coating pigmented with effect pigments or a mixture of effect pigments.

6. Process for the production of automobile finishes, characterized in that a pigmented aqueous coating according to one of Claims 1 to 3 is applied to a filler layer and the coating is baked.

7. Use of the aqueous coatings according to one of Claims 1 to 3 for the production of automobile finishes.

8. Use of the aqueous coatings according to one of Claims 1 to 3 for the production of clear coats of two-layer finishes consisting of a pigmented base coat and a clear coat.

**Revendications**

1. Peintures aqueuses, contenant

(A) une résine de polyacrylate hydrodiluable et
(B) un polyisocyanate bloqué ou un mélange de polyisocyanates bloqués,

la résine de polyacrylate hydrodiluable (A) pouvant être obtenue en ce que l'on ajoute à la suite ou de manière alternante en quantités partielles, à un solvant organique ou à un mélange de solvants organique

(I)
un composant (a), se composant

(a1) de 40 à 86,75 % en poids d'un ester de l'acide (méth)acrylique différent de (a2) et copolymérisable avec (a2), (a3), (b1) et (b2), ou un mélange d'esters de l'acide (méth)acrylique de ce genre,
(a2) de 12 à 50 % en poids d'un monomère éthyléniquement insaturé, copolymérisable avec (a1), (a3), (b1) et (b2), qui porte au moins un groupement hydroxyle par molécule, ou un mélange de monomères de ce genre et
(a3) de 0 à 25 % en poids d'un monomère éthyléniquement insaturé, différent de (a1) et (a2), copolymérisable avec (a1), (a2), (b1) et (b2), qui porte au moins un groupement hydroxyle par molécule, ou un mélange de monomères de ce genre

et un composant (b), se composant

(b1) de 1,25 à 15 % en poids d'un monomère éthyléniquement insaturé, copolymérisable avec (a1), (a2), (a3) et (b2), qui porte au moins un groupement carboxyle par molécule, ou un mélange de monomères de ce genre et
(b2) de 0 à 60 % en poids d'un monomère éthyléniquement insaturé, copolymérisable avec (a1), (a2), (a3), et (b1), exempt de groupements carboxyles, ou un mélange de monomères de ce genre

et que l'on procède à la polymérisation, en présence d'au moins un agent initiateur de polymérisation, et

(II)
en ce que l'on neutralise au moins partiellement et que l'on disperse dans l'eau, après achèvement de la polymérisation, la résine de polyacrylate obtenu, la somme des proportions en poids de (a1), (a2) (a3), (b1) et (b2) donnant toujours 100 % en poids, les quantités partielles se composant à chaque fois d'au moins 10 % en poids des quantités à utiliser en tout du composant (a), respectivement du composant (b), étant donné que l'on ne commence avec l'addition du composant (b) que lorsque l'on a fait réagir au moins 60 % en poids du composant (a), respectivement que l'on ne commence avec l'addition d'une quantité partielle que lorsque l'on a fait réagir au moins 60 % en poids des quantités partielles précédentes, (a1), (a2), (a3), (b1) et (b2) étant choisis en nature et en quantité de sorte que la résine de polyacrylate présente un indice hydroxyle de 60 à 180, un indice d'acidité de 10 à 100 et une température de transition vitreuse ($T_G$) de -40°C à +60°C, (a1), (a2) et (a3) contenant au maximum un nombre de groupements carboxyles tel que la résine de polyacrylate préparée à partir des composants (a1), (a2), ou (a3) a un indice d'acidité d'au plus 10 et que la proportion d'esters de l'acide (méth)acrylique, qui contiennent les groupements fonctionnels distincts des groupements hydroxyles et carboxyles, ne dépasse pas 7 % en poids, par rapport à la somme des proportions en poids de (a1), (a2), (a3), (b1) et (b2).

2. Peintures aqueuses selon la revendication 1, caractérisées en ce qu'elles contiennent, outre les composants (A) et (B), également encore une résine aminoplaste ou un mélange de résines aminoplastes (composant (C)), le rapport en poids du composant (B) au composant (C) se situant entre 20 : 80 et 80 : 20.

3. Peintures aqueuses selon la revendication 1 ou 2, caractérisées en ce que l'on peut obtenir la résine de polyacrylate hydrodiluable (A) en utilisant de 40 à 80 % en poids de (a1), de 16 à 45 % en poids de (a2), de 0 à 20 % en poids de (a3), de 2 à 7 % en poids de (b1) et de 0 à 28 % en poids de (b2), et en ce que (a1), (a2), (a3), (b1) et (b2) sont choisis en nature et en quantité de sorte que la résine de polyacrylate présente un indice hydroxyle de 80 à 180, un indice d'acidité de 15 à 40 et une température de transition vitreuse ($T_G$) de -20°C à +40°C.

4. Procédé de fabrication de vernis de finition pour automobiles, caractérisé en ce que l'on applique sur une couche de peinture de base pigmentée une peinture aqueuse selon l'une quelconque des revendications 1 à 3, et en ce que l'on procède à la cuisson de celle-ci, conjointment à la couche de peinture de base.

5. Procédé de fabrication de vernis de finition pour automobiles selon la revendication 4, caractérisé en ce que l'on applique une peinture aqueuse selon l'une quelconque des revendications 1 à 3, sur une couche de peinture de base pigmentée à l'aide d'un pigment à effet ou à l'aide d'un mélange de pigments à effet.

6. Procédé de fabrication de vernis de finition pour automobiles, caractérisé en ce que l'on applique, sur une couche de pigment de charge, une peinture aqueuse pigmentée selon l'une quelconque des revendications 1 à 3, et en ce que l'on procède à sa cuisson.

7. Utilisation des peintures aqueuses selon l'une quelconque des revendications 1 à 3, pour la fabrication de vernis de finitions pour automobiles.

8. Utilisation des peintures aqueuses selon l'une quelconque des revendications 1 à 3, pour la fabrication de couches de peintures claires de vernis à deux couches, se composant d'une couche de peinture de base pigmentée et d'une couche de peinture claire.